# EUROPÄISCHE PATENTSCHRIFT

(11) **EP 3 928 016 B1**
(45) Veröffentlichungstag und Bekanntmachung des Hinweises auf die Patenterteilung: **01.11.2023**
(21) Anmeldenummer: 20707576.3
(22) Anmeldetag: 14.02.2020
(51) Int. Cl.: F16L 9/147, F16L 9/18, F16L 57/02

(54) **ROHRSTRUKTUR UND VERFAHREN ZUM HERSTELLEN EINER SOLCHEN ROHRSTRUKTUR**
PIPE STRUCTURE AND METHOD FOR PRODUCING A PIPE STRUCTURE OF THIS TYPE
STRUCTURE TUBULAIRE ET PROCÉDÉ POUR FABRIQUER UNE TELLE STRUCTURE TUBULAIRE

(30) Priorität: 22.02.2019 DE 102019104536
(43) Veröffentlichungstag der Anmeldung: 29.12.2021
(73) Patentinhaber: Alleima GmbH, 33824 Werther (DE)
(72) Erfinder: HEDVALL, Christofer, 33615 Bielefeld (DE); FROBÖSE, Tomas, 40549 Düsseldorf (DE)
(74) Vertreter: Setréus, Ellen
(86) Internationale Anmeldenummer: PCT/EP2020/053993
(87) Internationale Veröffentlichungsnummer: WO 2020/169491

(56) Entgegenhaltungen:
- DE-A1-102005 028 766
- US-A- 4 559 974
- US-B1- 6 354 334

## Beschreibung

### TECHNISCHES GEBIET

Die vorliegende Offenbarung betrifft eine Rohrstruktur, ein Verfahren zum Herstellen einer solchen Rohrstruktur sowie eine Verwendung einer solchen Rohrstruktur.

### TECHNOLOGISCHER HINTERGRUND

Rohre, insbesondere Rohre aus Metall, werden in verschiedenen Bereichen der Technik eingesetzt, in denen sie hohen Belastungen ausgesetzt sind. Beispiele für diese Bereiche der Technik sind die Einspritztechnik für Verbrennungskraftmaschinen und die chemische Industrie. Hier besteht die Anforderung an die Rohre insbesondere darin, hohen Drücken über einen langen Zeitraum standhalten zu können.

Aus dem Stand der Technik sind bereits Rohre für Hochdruckanwendungen bekannt, die Drücken von über 12.000 bar standhalten können. Bei derart hohen Drücken unterliegt das Rohr einer sehr großen Belastung, die zur Ausbildung von Rissen in dem Rohr führen können. Durch die Rissbildung besteht die Gefahr, dass das Rohr versagt und im schlimmsten Fall ein Rohrbruch auftritt. Z.

Die US6354334 B1 zeigt ein Hochdruckrohr mit einer Stahlauskleidung, die mit einem Stapel von glasfaserverstärkten Epoxidmatrix-Verbundstoffplatten umwickelt wird.

Es ist bekannt, dass bei gleichbleibender Materialzusammensetzung die Druckbeständigkeit eines Rohres mit dessen Wanddicke zunimmt, da die Ausbreitung eines Risses von der Innenfläche des Rohres zur Außenfläche des Rohres mit zunehmender Wanddicke länger andauert. Daher werden für Hochdruckanwendungen in der Regel dickwandige Rohre eingesetzt. Hin zu höheren Drücken nimmt die Wanddicke des Rohres zu. Jedoch führen zunehmende Wanddicken bei gleichem Innendurchmesser zu ebenfalls zunehmendem Außendurchmesser und Eigengewicht des Rohres. Dies stellt sich bei vielen Anwendungen, beispielsweise bei der Verwendung in Land- und Luftfahrzeugen, als nachteilig heraus.

### ZUSAMMENFASSUNG

Es besteht daher ein Bedarf an einer Rohrstruktur die zumindest einen der zuvor genannten Nachteile überwindet. Weiterhin besteht ein Bedarf an einer Rohrstruktur, die gegenüber den aus dem Stand der Technik bekannten Rohren, noch höheren Drücken standhalten kann. Zudem besteht ein Bedarf an einem Verfahren zum Herstellen einer solchen Rohrstruktur.

Gemäß einem ersten Aspekt der vorliegenden Offenbarung wird daher eine Rohrstruktur bereitgestellt, die ein Innenrohr aus einem Metall, wobei das Innenrohr eine Innenfläche und eine Außenfläche aufweist, mindestens einen die Außenfläche des Innenrohres umgebenden Strang mit einer Mehrzahl von Garnen, wobei zumindest eines der Garne Kohlenstoffasern aufweist, und ein den Strang und das Innenrohr umgebendes Schutzrohr aufweist.

Der Rohrstruktur gemäß der vorliegenden Offenbarung liegt die Idee zu Grunde, das Innenrohr mit dem das Innenrohr umgebenden mindestens einen Strang zu verstärken. In einer Ausführungsform kann so die Rohrstruktur höheren Drücken standhalten als die aus dem Stand der Technik bekannten Rohre. Zudem kann in einer Ausführungsform eine höhere Lebensdauer der Rohrstruktur bei hohen Drücken erzielt werden. Ferner erhöht in einer Ausführungsform die Rohrstruktur gemäß der vorliegenden Offenbarung den Kraftschluss zwischen dem Schutzrohr und dem Innenrohr. In einer Ausführungsform der Offenbarung hält die Rohrstruktur einem Drücken von 15000 bar oder mehr stand.

Das Versagen eines Rohres und ein Rohrbruch beginnen häufig mit einem kritischen Wachstum eines Risses, bei dem sich beispielsweise ein Riss von der Rohrinnenfläche bis zur Rohraußenfläche fortpflanzt. Der mindestens eine Strang umschließt gemäß der vorliegenden Offenbarung das Innenrohr und vermindert aufgrund der Eigenschaften der enthaltenen Kohlenstofffasern zumindest in einer Ausführungsform die Gefahr, dass sich Risse bei hohen Drücken in dem Innenrohr bilden und sich diese Risse in dem Material des Innenrohres fortpflanzen. Dies reduziert die Gefahr des Versagens der gesamten Rohrstruktur gegenüber den aus dem Stand der Technik bekannten Rohren.

Durch das Verwenden des mindestens einen Stranges mit einer Mehrzahl von Garnen, wobei zumindest eines der Garne Kohlenstofffasern aufweist, lässt sich in einer Ausführungsform gegenüber den aus dem Stand der Technik bekannten Rohren für Hochdruckanwendungen bei vergleichbarer Druckbelastbarkeit die Wanddicke der gesamten Rohrstruktur und damit der Bauraum, den die Rohrstruktur einnimmt, reduzieren. Die Wanddicke der Rohrstruktur gemäß der vorliegenden Offenbarung berechnet sich als Differenz zwischen dem Außendurchmesser des Schutzrohres und dem Innendurchmesser des Innenrohres.

Darüber hinaus ist eine Rohrstruktur gemäß der vorliegenden Offenbarung verglichen mit einem massiven Rohr mit gleichem Innen- und Außendurchmesser leichter. Letzteres aufgrund der geringeren Materialdichte von Kohlenstofffasern gegenüber Metallen.

Kohlenstofffasern im Sinne der vorliegenden Offenbarung werden auch als Carbonfasern oder Kohlefasern bezeichnet. Sie werden industriell hergestellt und durch an den Rohstoff angepasste chemische Reaktionen in graphitartig angeordneten Kohlenstoff umgewandelt. Kohlenstofffasern weisen hohe Festigkeiten und Steifigkeiten bei gleichzeitig geringer Bruchdehnung in axialer Richtung auf.

Eine Mehrzahl von Kohlenstofffasern wird für die weitere Verarbeitung zu einem Garn zusammengefasst. Derartige Garne mit Kohlenstofffasern werden auch als Multifilamentgarne oder Rovings bezeichnet. Gemäß der vorliegenden Offenbarung wird unter dem Begriff Garn ein langes, dünnes Gebilde verstanden. Ein Garn im Sinne der vorliegenden Offenbarung kann in einer Ausführungsform neben den Kohlenstofffasern auch Fasern aus einem oder mehreren anderen Materialien aufweisen. Das Garn dient als Zwischenprodukt zur Herstellung eines Stranges im Sinne der vorliegenden Offenbarung.

In einer Ausführungsform der vorliegenden Offenbarung ist der mindestens eine Strang ausgewählt aus einem Gewebe, einem Geflecht, einem Gewirke und einem Multiaxialgelege oder irgendeiner Kombination davon.

Der mindestens eine Strang, der eine Mehrzahl von Garnen aufweist, enthält in einer Ausführungsform zusätzlich auch ein oder mehrere Garne aus oder mit einem oder mehreren anderen Materialien als Kohlenstofffasern.

Beispielsweise weist der Strang in einer Ausführungsform zusätzlich ein Garn mit Fasern aus einem Material mit mindestens einer von den Eigenschaften der Kohlenstofffasern verschiedenen Eigenschaft auf. Eine solche zusätzliche Eigenschaft kann sich positiv auf die Charakteristik der Rohrstruktur auswirken.

In der erfindungsgemäßen Ausführungsform der vorliegenden Offenbarung ist der mindestens eine Strang schlauchartig oder strumpfartig ausgestaltet. Durch die schlauchartige oder strumpfartige Ausgestaltung wird sichergestellt, dass der Strang das Innenrohr in Umfangsrichtung zu umgeben vermag.

In einer Ausführungsform der vorliegenden Offenbarung weist der mindestens eine Strang einen Anteil von mindestens 50% Kohlenstofffasern auf.

In einer Ausführungsform der vorliegenden Offenbarung weist der mindestens eine Strang einen Anteil von mindestens 90% Kohlenstofffasern auf.

In einer Ausführungsform der vorliegenden Offenbarung besteht der mindestens eine Strang vollständig aus Kohlenstofffasern.

In einer Ausführungsform ist die Dehnung des Innenrohres größer als die Dehnung des mindestens einen Stranges, während gleichzeitig die Zugfestigkeit des mindestens einen Stranges größer ist als die Zugfestigkeit des Innenrohres.

Ein Rohr, aber auch eine Rohrstruktur im Sinne der vorliegenden Offenbarung ist ein in einer Längsrichtung ausgedehnter Hohlkörper, dessen Länge in einer Ausführungsform wesentlich größer als sein Durchmesser. In einer Ausführungsform ist ein Rohr aber auch eine Rohrstruktur im Sinne der vorliegenden Offenbarung ein in der Längsrichtung ausgedehnter hohlzylindrischer Körper. Dabei ist für die Funktion als Rohr oder Rohrstruktur im Sinne der vorliegenden Offenbarung entscheidend, dass es im Inneren des Körpers einen freien Querschnitt zum Fördern eines Fluides, d.h. einer Flüssigkeit oder eines Gases, gibt.

In einer Ausführungsform der vorliegenden Offenbarung ist das Innenrohr ein nahtloses Rohr, d.h. ein Rohr ohne (Schweiß-)Naht in einer Längsrichtung des Rohres. Die Vorteile eines nahtlosen Rohres gegenüber einem in der Längsrichtung geschweißten Rohr sind eine Erhöhung der Lebensdauer des Rohres, die Möglichkeit, ein geringeres Gewicht bei gleicher Festigkeit zu erzielen, sowie eine bessere Qualität der Innenfläche. Im Vergleich eines geschweißten und mit einem nahtlosen Rohr mit gleichem Außendurchmesser und gleicher Wanddicke hält das nahtlose Rohre höheren Ringspannungen stand. Somit ist es möglich, ein nahtloses Rohr herzustellen, das im Vergleich zu einem geschweißten Rohr eine geringere Wanddicke aufweist, aber gleiche Ringspannungen aushalten kann. Aus diesem Grund ist es möglich, sowohl Material als auch Gewicht zu sparen. Somit kann sich eine Kombination aus einem nahtlosen Rohr und der Verwendung des mindestens einen die Außenfläche des Innenrohres umgebenden Stranges zusätzlich vorteilhaft auf eine geringere Wandstärke und Gewichtsreduktion im Vergleich zu aus dem Stand der Technik bekannten Rohren für Hochdruckanwendungen auswirken.

In einer Ausführungsform der vorliegenden Offenbarung ist das Innenrohr ein in seiner Längsrichtung geschweißtes Rohr.

In einer Ausführungsform der vorliegenden Offenbarung ist das Innenrohr ein kaltumgeformtes Rohr. Durch ein Kaltumformen wird eine Kaltverfestigung des Metalls des Innenrohres erreicht. Durch die Kaltverfestigung ist es möglich, die Werkstofffestigkeit und damit auch die Zugfestigkeit sowie die Druckbeständigkeit des umgeformten Innenrohres zu steigern. Dabei wird unter Zugfestigkeit die maximale mechanische Zugspannung verstanden, die der Werkstoff des Innenrohres aushält, bevor er bricht oder reißt. Somit lassen sich die Eigenschaften der so hergestellten Rohre gezielt durch das Kaltumformen und die damit verbundene Kaltverfestigung verändern. Unter einer Kaltumformung im Sinne der vorliegenden Offenbarung wird eine Umformung bei einer Temperatur, welche geringer ist als die Rekristallisationstemperatur des Metalls, verstanden.

In einer Ausführungsform der vorliegenden Offenbarung ist das Innenrohr autofrettiert.

In einer Ausführungsform der vorliegenden Offenbarung ist die Innenfläche des Innenrohres prägepoliert.

In der Hochdrucktechnik werden unterschiedliche metallische Werkstoffe für die Herstellung von Rohren und anderen Bauteilen verwendet. In einer Ausführungsform dervorliegenden Offenbarung ist ein Material des Innenrohres ausgewählt aus einem Kohlenstoffstahl, einem niedriglegierten Stahl und einem hochlegierten Stahl. Besonders eine hohe dynamische Druckbeständigkeit wird bei einem Rohr aus hochlegiertem Stahl erreicht, welches kaltverfestigt oder vergütet und abschließend zumindest auf der Innenfläche des Innenrohres prägepoliert wurde.

In einer Ausführungsform der vorliegenden Offenbarung ist das Innenrohr ein Edelstahlrohr. In einer Ausführungsform der vorliegenden Offenbarung besteht das Innenrohr aus einem austenitischen Edelstahl.

In einer Ausführungsform der vorliegenden Offenbarung ist das Innenrohr korrosionsbeständig. Dieses Merkmal ist für den Einsatz von Rohren für Hochdruckanwendungen vorteilhaft, da eine einsetzende Korrosion, d.h. eine fortschreitende Zersetzung des Innenrohres zu einer Beeinträchtigung von dessen Druckbeständigkeit führen würde.

In einer weiteren Ausführungsform der Offenbarung weist das kaltverfestigte Innenrohr eine Zugfestigkeit (Rm) von mindestens 900 MPa auf. In einer Ausführungsform weist das kaltverfestigte Innenrohr eine Zugfestigkeit (Rm) von mindestens 1.100 MPa auf.

In einer Ausführungsform der vorliegenden Offenbarung besteht das Innenrohr aus einem austenitischen Edelstahl aufweisend in Gewichts-% C ≤ 0,08, 8 ≤ Mn ≤ 10, Si ≤ 1, P ≤ 0,06, S ≤ 0,03, 19 ≤ Cr ≤ 21, 5 ≤ Ni ≤ 7, 0,15 ≤ N ≤ 0,4, 1,5 ≤ Mo ≤ 3, mit dem Rest Fe und gewöhnlich vorkommenden Verunreinigungen. In einer Ausführungsform dieses Werkstoffs ist ausgedrückt in Gewichts-% C ≤ 0.040. In einerweiteren Ausführungsform der vorliegenden Offenbarung besteht das Innenrohr aus einem austenitischen Edelstahl bestehend aus in Gewichts-% C ≤ 0,08, 8 ≤ Mn ≤ 10, Si ≤ 1, P ≤ 0,03, S ≤ 0,03, 19 ≤ Cr ≤ 21,5, 5,5 ≤ Ni ≤ 7,5, 0,15 ≤ N ≤ 0,4, 1,5 ≤ Mo ≤ 3, mit dem Rest Fe und gewöhnlich vorkommenden Verunreinigungen. In einer Ausführungsform dieses Werkstoffs ist ausgedrückt in Gewichts-% C ≤ 0.04.

Der zuvor definierte austenitische Edelstahl ist beispielsweise als 21-6-9-Edelstahl von der Firma Sandvik kommerziell erhältlich. Dieser Edelstahl wird auch als UNS S21900 bezeichnet wird. Das Material zeichnet sich durch einen hohen Gehalt an Mn, einen niedrigen Gehalt an Ni und einen Zusatz von N aus. Der Stahl ist charakterisiert durch eine hohe mechanische Festigkeit im gehärteten Zustand, sehr gute Schlagzähigkeit auch bei Temperaturen bis zu -230°C und eine sehr gute Hochtemperaturoxidationsbeständigkeit.

In der erfindungsgemäßen Ausführungsform der Offenbarung ist das Innenrohr ein Hochdruckrohr mit einem Innendurchmesser, einem Außendurchmesser und einer Wandstärke. Dabei wird als Hochdruckrohr im Sinne der vorliegenden Offenbarung ein Rohr bezeichnet, bei welchem die Wandstärke gleich dem oder größer als der Innendurchmesser ist. Dabei ist die Wandstärke des Innenrohres definiert als die Differenz zwischen dem Außendurchmesser des Innenrohres und dem Innendurchmesser des Innenrohres. Hochdruckrohre im Sinne der vorliegenden Offenbarung dienen in einer Ausführungsform der Führung von Fluiden mit einem Druck von mehr als 1300 bar.

In einer Ausführungsform der Offenbarung weist das Innenrohr eine Oberflächengüte auf, sodass zumindest auf der Innenfläche vorhandene Risse eine Tiefe von 50 µm nicht überschreiten. Mit einer besseren Oberflächengüte geht auch eine bessere Beständigkeit des Innenrohres gegenüber der Bildung, der Ausbreitung und dem Anwachsen von Rissen einher. Daher reduziert sich die Gefahr eines Zerberstens des Innenrohres bei dem Beaufschlagen mit hohen Drücken, umso höher die Oberflächengüte des Innenrohres ist.

In einer Ausführungsform überschreiten vorhandene Risse zumindest auf der Innenfläche des Innenrohrs eine Tiefe von 20 µm nicht. In einer Ausführungsform überschreiten zumindest auf der Innenfläche des Innenrohrs vorhandene Risse eine Tiefe von 10 µm nicht. In einer Ausführungsform überschreiten vorhandene Risse zumindest auf der Innenfläche des Innenrohrs eine Tiefe von 7 µm nicht. In einer Ausführungsform gelten die angegebenen Grenzen für die maximale Risstiefe nicht nur auf der Innenfläche, sondern auf der gesamten Oberfläche des Innenrohres. Eine derart hohe Oberflächengüte sorgt dafür, dass sich vorhandene Risse kaum noch von der Innenfläche des Innenrohres ausgehend in Richtung der Außenfläche des Innenrohres ausbreiten können, so dass das Innenrohr eine hohe Druckbeständigkeit aufweist.

Gerade an Stellen, an denen das Innenrohr mit darin geführtem Fluid in Kontakt gerät, ist es wichtig für eine ausreichend hohe Oberflächengüte zu sorgen, da bereits kleine Unebenheiten bei Kontakt mit unter hohen Drücken stehenden Fluiden zu der Bildung eines Risses führen können. Daher ist in einer Ausführungsform der vorliegenden Offenbarung die Oberflächengüte der Innenfläche des Innenrohres durch ein Bearbeiten der Innenfläche, beispielsweise durch Prägepolieren, derart ausgestaltet, dass die zuvor aufgezählten Grenzwerte für die maximale Risstiefe eingehalten werden. Das den mindestens einen Strang und das Innenrohr umgebende Schutzrohr schützt den mindestens einen Strang vor Umgebungseinflüssen. Das Schutzrohr reduziert beispielsweise einen Abrieb des mindestens einen Stranges durch Material, welches die Rohrstruktur im verbauten Zustand umgibt. Derartige Umgebungseinflüsse könnten anderenfalls zu einer Schwächung oder Zerstörung des mindestens einen Stranges führen.

In der erfindungsgemäßen Ausführungsform der Offenbarung besteht das Schutzrohr aus einem Metall. Während in einer Ausführungsform der Offenbarung das Schutzrohr und das Innenrohr aus dem gleichen Material bestehen, weisen das Schutzrohr und das Innenrohr in einer alternativen Ausführungsform voneinander verschiedene Materialien auf. Letzteres hat den Vorteil, dass gezielt unterschiedliche Eigenschaften für das Schutzrohr und das Innenrohr bereitgestellt werden können, die sich beliebig miteinander kombinieren lassen, um eine an eine bestimmte Anwendung angepasste Rohrstruktur zu erhalten.

In einer Ausführungsform der Offenbarung besteht das Schutzrohr aus einem Nichteisenmetall (NE-Metall). Als NE-Metall im Sinne der vorliegenden Offenbarung werden alle Metalle außer Eisen sowie Metall-Legierungen, in denen Eisen nicht als Hauptelement enthalten ist bzw. der Anteil an Reineisen (Fe) 50 % nicht übersteigt, bezeichnet. Beispiele für NE-Metalle in diesem Sinne sind Kupfer, Aluminium, Flugzeugaluminium, Zink, Bronze und Messing.

In einer Ausführungsform der Offenbarung ist das Schutzrohr ein nahtloses Rohr. Es versteht sich, dass zumindest bei der Verwendung eines nahtlosen Rohres als Schutzrohr, das Innenrohr zusammen mit dem mindestens einen die Außenfläche des Innenrohres umgebenden Strang, axial in die Öffnung des Schutzrohres eingeführt wird.

In einer Ausführungsform der Offenbarung ist das Schutzrohr ein in Längsrichtung des Rohres geschweißtes Rohr. Durch das Längsnahtschweißen wird es möglich, dass das Innenrohr zusammen mit dem mindestens einen Strang einfacher in das Schutzrohr einzubringen. In einer Ausführungsform, in der das Schutzrohr aus einem Metall besteht, wird das Schutzrohr aus einem Streifen aus Metallblech zu einem längsnahtgeschweißten Schutzrohr geformt. Bei dieser Ausführungsform ist es möglich, zunächst das Innenrohr zusammen mit dem das Innenrohr umgebenden mindestens einen Strang auf den Metallstreifen zu geben und den Metallstreifen durch Biegen und anschließendes Längsnahtschweißen zu dem den mindestens einen Strang umgebenden Schutzrohr zu formen.

In einer Ausführungsform der vorliegenden Offenbarung erstreckt sich der mindestens eine Strang konzentrisch zu dem Innenrohr. Das Schutzrohr wiederum erstreckt sich konzentrisch zu Strang und Innenrohr. Somit liegt der mindestens eine Strang zwischen dem Innenrohr und dem Schutzrohr. Es entsteht ein Formschluss, so dass sich der mindestens eine Strang in radialer Richtung weder über das Innenrohr noch über das Schutzrohr hinaus bewegen kann. Besteht nur ein Formschluss, so können sich das Schutzrohr, der Strang und das Innenrohr in axialer Richtung gegeneinander bewegen.

In einer Ausführungsform der vorliegenden Offenbarung wird das Schutzrohr auf das Innenrohr und den mindestens einen Strang aufgezogen. So entsteht zwischen dem Schutzrohr und dem mindestens einen Strang sowie zwischen dem mindestens einen Strang und dem Innenrohr ein enger Formschluss in radialer Richtung, so dass sich der mindestens eine Strang in radialer Richtung nicht gegenüber dem Innenrohr und dem Schutzrohr bewegen kann.

In einer Ausführungsform der Offenbarung sind das Schutzrohr und der mindestens eine Strang zudem kraftschlüssig miteinander verbunden.

In einer Ausführungsform der Offenbarung sind das Schutzrohr, der mindestens eine Strang und das Innenrohr kraftschlüssig miteinander verbunden. Die Reibkräfte zwischen Schutzrohr und dem mindestens einen Strang einerseits und zwischen dem mindestens einen Strang und dem Innenrohr andererseits verhindern dann eine axiale Verschiebung der mindestens drei Elemente gegeneinander. Durch die kraftschlüssige Verbindung zwischen dem Schutzrohr und dem mindestens einen Strang können die Eigenschaften der Rohrstruktur insgesamt verbessert werden, so dass die Rohrstruktur einem noch höheren Druck standzuhalten vermag, und der Bildung, der Ausbreitung und dem Anwachsen von Rissen innerhalb des Innenrohres entgegen gewirkt wird.

Gemäß einem weiteren Aspekt der vorliegenden Offenbarung wird die Rohrstruktur gemäß einer der zuvor beschriebenen Ausführungsformen zum Führen eines mit einem Druck von 15.000 bar oder mehr beaufschlagten Fluides verwendet. In einer Ausführungsform der Offenbarung wird die Rohrstruktur zum Führen eines mit einem Druck von 18.000 bar oder mehr beaufschlagten Fluides verwendet.

Gemäß einem weiteren Aspekt der vorliegenden Offenbarung wird ein Verfahren zum Herstellen einer Rohrstruktur bereitgestellt, wobei das Verfahren die Schritte aufweist:
- Bereitstellen eines Innenrohres aus einem Metall, wobei das Innenrohr eine Innenfläche und eine Außenfläche aufweist,
- Aufbringen mindestens eines Stranges mit einer Mehrzahl von Garnen auf die Außenfläche des Innenrohres, wobei zumindest eines der Garne Kohlenstoffasern aufweist, und
- Einbringen des Stranges mit dem Innenrohr in ein Schutzrohr.

Soweit im vorstehenden Text Merkmale der Rohrstruktur gemäß Ausführungsformen der vorliegenden Offenbarung beschrieben wurden, so weist das Verfahren gemäß der vorliegenden Offenbarung die entsprechenden Schritte zu deren Ausbildung auf. Zudem kann mit dem beschriebenen Verfahren eine Ausführungsform der Rohrstruktur gemäß der vorliegenden Offenbarung hergestellt werden.

Zum Aufbringen des mindestens einen Stranges auf das Innenrohr sind sämtliche Verfahren denkbar, die dazu führen, dass der mindestens eine Strang das Innenrohr umgib. Beispielsweise kann der mindestens eine Strang, beispielsweise in Form eines Rundgeflechts, wie ein Socken oder Stutzen auf das Innenrohr aufgezogen werden. In einer Ausführungsform der Offenbarung jedoch umfasst das Aufbringen des mindestens einen Stranges auf die Außenfläche des Innenrohres ein Umweben, ein Umflechten oder ein Umwirken der Außenfläche des Innenrohres. Durch das Umweben, Umflechten oder Umwirken entsteht ein Formschluss zwischen dem mindestens einen Strang und dem Innenrohr, sodass sich der mindestens eine Strang nicht mehr in radialer Richtung gegenüber dem Innenrohr bewegen kann.

In einer Ausführungsform der vorliegenden Offenbarung erfolgt das Umweben, Umflechten oder Umwirken derart, dass neben dem Formschluss in radialer Richtung auch ein Kraft- bzw. Reibschluss zwischen dem mindestens einen Strang und dem Innenrohr entsteht. In einer Ausführungsform der Offenbarung erfolgt das Umweben, Umflechten oder Umwirken derart, dass der mindestens eine Strang über die gesamte Erstreckung des Stranges in der Längsrichtung der Rohrstruktur kraft- bzw. reibschlüssig mit dem Innenrohr verbunden ist.

In einer Ausführungsform der vorliegenden Offenbarung umfasst das Bereitstellen des Innenrohres ein Kaltumformen einer nahtlosen Luppe zu dem Innenrohr. Kaltumformverfahren werden eingesetzt, um ein hohles Halbzeug aus Metall, nämlich die Luppe, zu einem fertigen Innenrohr umzuformen. Durch das Kaltumformen lassen sich der Innen- und der Außendurchmesser eines Rohres verändern und sehr genau dimensionieren. Zudem ist die Kaltumformung geeignet, die Oberflächeneigenschaften des Rohres zu verbessern. Darüber hinaus geht mit der Kaltumformung eine Kaltverfestigung einher, wodurch sich die Eigenschaften der so hergestellten Rohre gezielt verändern lassen. Durch die Kaltverfestigung ist es möglich die Werkstofffestigkeit und damit auch die Zugfestigkeit des umgeformten Rohres zu steigern.

In einer Ausführungsform der vorliegenden Offenbarung ist das Kaltumformen der nahtlosen Luppe zu dem Innenrohr ein Kaltziehen. In einer Ausführungsform der vorliegenden Offenbarung wird das Innenrohr durch Ziehen der Luppe aus Metall durch eine Ziehmatrize und optional über ein Ziehinnenwerkzeug hergestellt. Das Ziehinnenwerkzeug kann entweder ein feststehender oder fliegender Ziehkern sein.

In einer Ausführungsform der vorliegenden Offenbarung ist das Kaltumformen der nahtlosen Luppe zu dem Innenrohr ein Kaltpilgerwalzen.

In einer Ausführungsform der Offenbarung umfasst das Bereitstellen des Innenrohres ein Prägepolieren der Innenfläche des Innenrohres. Prägepolieren bezeichnet ein Umformverfahren zur Erzeugung einer sehr hohen Oberflächengüte bei einem metallischen Bauteil.

In einer Ausführungsform der vorliegenden Offenbarung wird eine kraftschlüssige Verbindung zwischen dem Schutzrohr und dem mindestens einen Strang durch ein Kaltumformen des Schutzrohres bewirkt, wobei ein Innendurchmesser des Schutzrohres vor dem Kaltumformen größer ist als nach dem Kaltumformen. Während des Kaltumformens des Schutzrohres erstreckt sich dabei der mindestens eine Strang mit dem Innenrohr in dem Schutzrohr.

In einer Ausführungsform der Offenbarung ist das Kaltumformen ein Kaltziehen durch eine Ziehmatrize. Dabei werden in einer Ausführungsform der Offenbarung das Schutzrohr, der mindestens eine Strang und das Innenrohr gemeinsam durch die Ziehmatrize gezogen.

Durch dieses Kaltumformen des Schutzrohres wird in einer Ausführungsform ein enger Formschluss in radialer Richtung zwischen dem Innenrohr und dem das Innenrohr umgebenden mindestens einen Strang und dem den Strang umgebende Schutzrohr bewirkt. So kann sich der mindestens eine Strang in radialer Richtung nicht gegenüber dem Innenrohr und/oder dem Schutzrohr bewegen.

In einer Ausführungsform wird durch das Kaltumformen des Schutzrohres mit dem sich darin erstreckenden mindestens einen Strang und dem Innenrohr ein Kraftschluss zwischen dem Schutzrohr und dem mindestens einen Strang bewirkt. In einer Ausführungsform wird durch das Kaltumformen des Schutzrohres mit dem sich darin erstreckenden mindestens einen Strang und dem Innenrohr ein Kraftschluss zwischen dem Innenrohr und dem mindestens einen Strang bewirkt. In einer Ausführungsform wird durch das Kaltumformen des Schutzrohres mit dem sich darin erstreckenden mindestens einen Strang und dem Innenrohr ein Kraftschluss zwischen dem Schutzrohr, dem mindestens einen Strang und dem Innenrohr bewirkt. Die Reibkraft zwischen Schutzrohr, dem mindestens einen Strang und dem Innenrohr verhindert dann eine Relativbewegung zwischen diesen Elementen in axialer Richtung.

In einer Ausführungsform der vorliegenden Offenbarung sind nach dem Kaltumformen des Schutzrohres, das Innenrohr, der mindestens eine Strang und das Schutzrohr über die gesamte Erstreckung des mindestens einen Stranges in der Längsrichtung der Rohrstruktur kraftschlüssig miteinander verbunden.

Ein Reiben einer Mehrzahl von Garnen mit Kohlenstofffasern aneinander oder einer Mehrzahl von Kohlenstofffasern aneinander kann dazu führen, dass zumindest einzelne Kohlenstoffasern geschwächt oder zerstört werden. Dadurch werden die Eigenschaften des aus den Garnen gebildeten Stranges nachhaltig verändert, z.B. seine Zugfestigkeit verringert. In einer Ausführungsform, in der durch das Kaltumformen des Schutzrohres ein Kraftschluss zwischen den Elementen der Rohrstruktur bewirkt wird, wird daher eine Reibung oder Beeinflussung zwischen den einzelnen Garnen und/oder zwischen einzelnen Kohlenstofffasern untereinander reduziert. Somit werden die Garne bzw. die Stränge innerhalb der Rohrstruktur durch das Kaltumformen des Schutzrohres auf dem mindestens einen Strang und dem Innenrohr geschützt.

### KURZE BESCHREIBUNG DER FIGUREN

Weitere Vorteile, Merkmale und Anwendungsmöglichkeiten der vorliegenden Offenbarung werden anhand der folgenden Beschreibung einer Ausführungsform und der dazugehörigen Figuren deutlich. Die nachstehende Beschreibung der Implementierungen von Ausführungsformen der vorliegenden Offenbarung ist besser verständlich, wenn sie in Verbindung mit den beigefügten Zeichnungen betrachtet werden. Die gezeigten Implementierungen sind nicht auf die detailliert beschriebenen Ausgestaltungen beschränkt. In den Figuren sind ähnliche Elemente mit gleichen Bezugszeichen bezeichnet.
- Figur 1: ist eine schematische Querschnittsansicht einer Implementierung einer Rohrstruktur gemäß einer Ausführungsform der vorliegenden Offenbarung.
- Figur 2: ist ein Ablaufdiagramm einer Implementierung eines Verfahrens gemäß vorliegenden Offenbarung zum Herstellen einer Rohrstruktur in einer Implementierung der vorliegenden Offenbarung.

### DETAILLIERTE BESCHREIBUNG

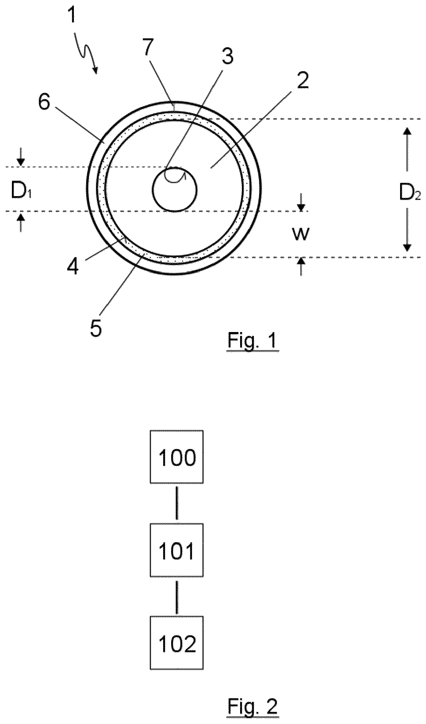

Figur 1 ist eine schematische Querschnittsansicht einer Implementierung der Rohrstruktur 1 gemäß einer Ausführungsform der vorliegenden Offenbarung. Die Rohrstruktur 1 weist dabei ein Innenrohr2 mit einer Innenfläche 3 und einer Außenfläche 4 auf. Die Außenfläche 4 des Innenrohres 2 ist dabei von einem Strang 5 umgeben. Der Strang 5 wiederum ist von einem Schutzrohr 6 umgeben.

Das Innenrohr 2 ist ein nahtloses, kaltverfestigtes Rohr aus einem als "21-6-9" bezeichneten austenitischen Edelstahl. Das Innenrohr 2 wurde durch Kaltziehen hergestellt und weist aufgrund der dadurch bewirkten Kaltverfestigung eine Zugfestigkeit von 1.100 N auf. Das Innenrohr 2 weist zudem einen Innendurchmesser D1 und einen Außendurchmesser D2 sowie eine Wandstärke w auf. Die Wandstärke w des Innenrohres 2 ist dabei größer als der Innendurchmesser D1 des Innenrohres 2. Es handelt sich somit um ein Hochdruckrohr. Durch das Kaltziehen des Innenrohres 2 weist dieses eine hohe Oberflächengüte auf, sodass auf der Innenfläche 3 vorhandene Risse eine Tiefe von 10 µm nicht überschreiten.

Der Strang 5 besteht aus einer Mehrzahl von Garnen, die wiederum vollständig aus Kohlenstofffasern hergestellt sind. Der Strang 5 ist in der dargestellten Ausführungsform ein schlauchartiges Geflecht, welches das Innenrohr 2 in Umfangsrichtung wie ein Socken umgibt.

Das Schutzrohr 6 besteht aus Aluminium und weist eine Schweißnaht 7 auf, die sich in Längsrichtung über die gesamte Rohrstruktur 1 erstreckt. Das Schutzrohr 6, der Strang 5 und das Innenrohr 2 sind dabei über die gesamte Längsrichtung der Rohrstruktur 1 miteinander kraftschlüssig verbunden.

In Figur 2 ist ein Ablaufdiagramm einer Implementierung des Verfahrens zum Herstellen der in Figur 1 dargestellten Rohrstruktur 1 dargestellt. In einem ersten Schritt 100 wird das Innenrohr 2 bereitgestellt, in dem eine nahtlose Luppe aus dem austenitischen Edelstahl "21-6-9" zu dem Innenrohr 2 kaltumgeformt wird.

Das Kaltumformen erfolgt dabei durch Kaltziehen der nahtlosen Luppe durch eine Ziehmatrize. Die Ziehmatrize bearbeitet die Außenfläche des Innenrohres und bestimmt so den Außendurchmesser D2 des Innenrohres 2. Zudem wird ein Ziehkern genutzt, um die Innenfläche 3 des Innenrohres zu bearbeiten und so den Innendurchmesser D1 des Innenrohres 2 festzulegen. Durch das Kaltziehen durch die Ziehmatrize und über den Ziehkern wird zudem die Oberflächengüte des Innenrohres 2 zumindest auf der Innenfläche 3 durch Prägepolieren erhöht.

In einem Schritt 101 wird der Strang 5 durch ein Umweben der Außenfläche 4 des Innenrohres 2 mit einer Mehrzahl von Garnen, die vollständig aus Kohlenstofffasern bestehen, auf die Außenfläche 4 des Innenrohres 2 aufgebracht. Durch das Umweben entsteht ein Formschluss zwischen dem Innenrohr 2 und dem Strang 5, so dass sich der Strang 5 nicht mehr in radialer Richtung gegenüber dem Innenrohr 2 bewegen kann. Zusätzlich bewirkt das Umweben, dass der Strang 5 und das Innenrohr 2 über die gesamte Erstreckung des Stranges 5 in Längsrichtung der Rohrstruktur 1 kraftschlüssig mit einander verbunden sind. Aufgrund der daher wirkenden Reibkräfte kann sich der Strang 5 nicht mehr in axialer Richtung gegenüber dem Innenrohr 2 bewegen.

In einem Schritt 102 erfolgt ein Einbringen des Stranges 5 zusammen mit dem Innenrohr 2 in das Schutzrohr 6. Hierfür wird das Schutzrohr 6 auf den Strang 5 und das Innenrohr 2 aufgezogen, so dass sich zusätzlich ein enger Formschluss zwischen dem Strang 5, dem Innenrohr 2 und dem Schutzrohr 6 in radialer Richtung ergibt.

Die mit dem Verfahren gemäß Figur 2 erhaltene Rohrstruktur 1 aus Figur 1 ist hochdruckfest und zur Führung von mit einem Druck von 15.000 bar oder mehr beaufschlagten Fluiden geeignet.

Für Zwecke der ursprünglichen Offenbarung wird darauf hingewiesen, dass sämtliche Merkmale, wie sie sich aus der vorliegenden Beschreibung und den Zeichnung sowie den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Offenbarung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Offenbarung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt Ihre Kombination nicht aus. Bezugszeichen in den Ansprüchen sind nicht als Beschränkung des Schutzbereichs gedacht.

### Bezugszeichen

- 1: Rohrstruktur
- 2: Innenrohr
- 3: Innenfläche
- 4: Außenfläche
- 5: Strang
- 6: Schutzrohr
- 7: Schweißnaht

- D1: Innendurchmesser
- D2: Außendurchmesser
- w: Wandstärke

- 100: Bereitstellen des Innenrohres
- 101: Aufbringen des Stranges auf das Innenrohr
- 102: Einbringen des Innenrohres mit dem Strang in das Schutzrohr

## Patentansprüche

1. Rohrstruktur (1), welche aufweist
ein Innenrohr (2) aus einem Metall, wobei das Innenrohr (2) eine Innenfläche (3) und eine Außenfläche (4) aufweist,
mindestens einen die Außenfläche (4) des Innenrohres (2) umgebenden Strang (5) mit einer Mehrzahl von Garnen, wobei zumindest eines der Garne Kohlenstoffasern aufweist, und
ein den Strang (5) und das Innenrohr (2) umgebendes Schutzrohr (6)
**dadurch gekennzeichnet,**
**dass** der mindestens eine Strang (5) schlauchartig ausgestaltet ist; und.
**dass** das Innenrohr (2) ein Hochdruckrohr mit einem Innendurchmesser (D1), einem Außendurchmesser (D2) und einer Wandstärke (w) ist, wobei die Wandstärke (w) gleich dem oder größer als der Innendurchmesser (D1) ist und
**dass** das Schutzrohr (6) aus einem Metall besteht.

2. Rohrstruktur (1) nach dem vorhergehenden Anspruch, **dadurch gekennzeichnet, dass** der mindestens eine Strang (5) ausgewählt ist aus einem Gewebe, einem Geflecht, einem Gewirk und einem Multiaxialgelege oder irgendeiner Kombination davon.

3. Rohrstruktur (1) nach irgendeinem der vorhergehenden Ansprüche, **dadurch gekennzeichnet, dass** der mindestens eine Strang (5) einen Anteil von mindestens 50 % Kohlenstoffasern aufweist.

4. Rohrstruktur (1) nach irgendeinem der vorhergehenden Ansprüche, **dadurch gekennzeichnet, dass** das Innenrohr (2) ein nahtloses Rohr ist.

5. Rohrstruktur (1) nach irgendeinem der vorhergehenden Ansprüche, **dadurch gekennzeichnet, dass** das Innenrohr (2) ein kaltumgeformtes Rohr ist.

6. Rohrstruktur (1) nach irgendeinem der vorhergehenden Ansprüche, **dadurch gekennzeichnet, dass** ein Material des Innenrohres (2) ausgewählt ist aus einem Kohlenstoffstahl, einem niedriglegierten Stahl und einem hochlegierten Stahl.

7. Rohrstruktur (1) nach irgendeinem der vorhergehenden Ansprüche, **dadurch gekennzeichnet, dass** das Innenrohr (2) eine Oberflächengüte aufweist derart, dass auf der Innenfläche (3) vorhandene Risse eine Tiefe von 50 µm nicht überschreiten.

8. Rohrstruktur (1) nach irgendeinem der vorhergehenden Ansprüche, **dadurch gekennzeichnet, dass** zumindest das Schutzrohr (6) und der mindestens eine Strang (5) kraftschlüssig miteinander verbunden sind oder der mindestens eine Strang (5) und das Innenrohr (2) kraftschlüssig miteinander verbunden sind.

9. Verwendung einer Rohrstruktur (1) nach irgendeinem der vorhergehenden Ansprüche zum Führen eines mit einem Druck von 15000 bar oder mehr beaufschlagten Fluids.

10. Verfahren zum Herstellen einer Rohrstruktur (1) nach einem der Ansprüche 1 bis 8, mit den Schritten
Bereitstellen (100) eines Innenrohres (2) aus einem Metall, wobei das Innenrohr (2) eine Innenfläche (3) und eine Außenfläche (4) aufweist,
Aufbringen (101) mindestens eines Stranges (5) mit einer Mehrzahl von Garnen auf die Außenfläche (4) des Innenrohres (2), wobei zumindest eines der Garne Kohlenstoffasern aufweist, und
Einbringen (102) des Stranges (5) mit dem Innenrohr (2) in ein Schutzrohr (6).

11. Verfahren nach dem vorhergehenden Anspruch, **dadurch gekennzeichnet, dass** das Aufbringen (101) des mindestens einen Stranges (5) auf die Außenfläche (4) des Innenrohres (2) ein Umweben, ein Umflechten oder ein Umwirken der Außenfläche (4) des Innenrohres (2) umfasst.

12. Verfahren nach Anspruch 10 oder 11, **dadurch gekennzeichnet**, das Bereitstellen (100) des Innenrohres (2) ein Kaltumformen einer nahtlosen Luppe zu dem Innenrohr (2) umfasst.

## Claims

1. Pipe structure (1) which has
an inner pipe (2) made of a metal, wherein the inner pipe (2) has an inner surface (3) and an outer surface (4),
at least one strand (5) surrounding the outer surface (4) of the inner pipe (2) and has a plurality of yarns, wherein at least one of the yarns has carbon fibres, and
a protective pipe (6) surrounding the strand (5) and the inner pipe (2),
**characterised in that**
the at least one strand (5) has a tubular design; and
the inner pipe (2) is a high-pressure pipe having an inside diameter (D1), an outside diameter (D2) and a wall thickness (w), wherein the wall thickness (w) is equal to or greater than the inside diameter (D1), and
the protective tube (6) consists of a metal.

2. Pipe structure (1) according to the preceding claim, **characterised in that** the at least one strand (5) is selected from a woven fabric, a mesh, a knitted fabric and a multiaxial fabric, or any combination thereof.

3. Pipe structure (1) according to any one of the preceding claims, **characterised in that** the at least one strand (5) has a proportion of at least 50% carbon fibres.

4. Pipe structure (1) according to any one of the preceding claims, **characterised in that** the inner pipe (2) is a seamless pipe.

5. Pipe structure (1) according to any one of the preceding claims, **characterised in that** the inner pipe (2) is a cold-formed pipe.

6. Pipe structure (1) according to any one of the preceding claims, **characterised in that** a material of the inner pipe (2) is selected from a carbon steel, a low-alloy steel and a high-alloy steel.

7. Pipe structure (1) according to any one of the preceding claims, **characterised in that** the inner pipe (2) has a surface quality such that cracks present on the inner surface (3) do not exceed a depth of 50 µm.

8. Pipe structure (1) according to any one of the preceding claims, **characterised in that** at least the protective pipe (6) and the at least one strand (5) are frictionally connected to one another or the at least one strand (5) and the inner pipe (2) are frictionally connected to one another.

9. Use of a pipe structure (1) according to any one of the preceding claims for guiding a fluid subjected to a pressure of 15,000 bar or more.

10. Method for producing a pipe structure (1) according to any one of claims 1 to 8, having the steps of
providing (100) an inner pipe (2) made of a metal, wherein the inner pipe (2) has an inner surface (3) and an outer surface (4),
applying (101) at least one strand (5) having a plurality of yarns to the outer surface (4) of the inner tube (2), wherein at least one of the yarns has carbon fibres, and
introducing (102) the strand (5) with the inner pipe (2) into a protective pipe (6).

11. Method according to the preceding claim, **characterised in that** the applying (101) of the at least one strand (5) to the outer surface (4) of the inner pipe (2) comprises weaving, braiding or knitting around the outer surface (4) of the inner pipe (2).

12. Method according to claim 10 or 11, **characterised in that** providing (100) the inner pipe (2) comprises cold forming a seamless bloom to give the inner pipe (2).

## Revendications

1. Structure tubulaire (1), laquelle présente
un tube intérieur (2) en un métal, dans laquelle le tube intérieur (2) présente une surface intérieure (3) et une surface extérieure (4),
au moins un brin (5) entourant la surface extérieure (4) du tube intérieur (2) et comprenant une pluralité de fils, dans laquelle au moins l'un des fils présente des fibres de carbone, et
un tube de protection (6) entourant le brin (5) et le tube intérieur (2), **caractérisée en ce que**
l'au moins un brin (5) est configuré en forme tubulaire ; et.
**en ce que** le tube intérieur (2) est un tube haute pression avec un diamètre intérieur (D1), un diamètre extérieur (D2) et une épaisseur de paroi (w), dans laquelle l'épaisseur de paroi (w) est égale ou supérieure au diamètre intérieur (D1) et
le tube de protection (6) consiste en un métal.

2. Structure tubulaire (1) selon la revendication précédente, **caractérisée en ce que** l'au moins un brin (5) est choisi parmi un tissu, une tresse, un tissu tricoté et une structure multiaxiale ou une quelconque combinaison de ceux-ci.

3. Structure tubulaire (1) selon l'une quelconque des revendications précédentes, **caractérisée en ce que** l'au moins un brin (5) présente une proportion d'au moins 50 % de fibres de carbone.

4. Structure tubulaire (1) selon l'une quelconque des revendications précédentes, **caractérisée en ce que** le tube intérieur (2) est un tube sans soudure.

5. Structure tubulaire (1) selon l'une quelconque des revendications précédentes, **caractérisée en ce que** le tube intérieur (2) est un tube formé à froid.

6. Structure tubulaire (1) selon l'une quelconque des revendications précédentes, **caractérisée en ce qu'**un matériau du tube intérieur (2) est choisi parmi un acier au carbone, un acier faiblement allié et un acier fortement allié.

7. Structure tubulaire (1) selon l'une quelconque des revendications précédentes, **caractérisée en ce que** le tube intérieur (2) présente une finition de surface de sorte que des fissures présentes sur la surface intérieure (3) ne dépassent pas une profondeur de 50 µm.

8. Structure tubulaire (1) selon l'une quelconque des revendications précédentes, **caractérisée en ce qu'**au moins le tube de protection (6) et l'au moins un brin (5) sont reliés entre eux à force ou **en ce que** l'au moins un brin (5) et le tube intérieur (2) sont reliés entre eux à force.

9. Utilisation d'une structure tubulaire (1) selon l'une quelconque des revendications précédentes pour conduire un fluide soumis à une pression égale ou supérieure à 15 000 bars.

10. Procédé de fabrication d'une structure tubulaire (1) selon l'une quelconque des revendications 1 à 8, avec les étapes consistant à
fournir un tube intérieur (2) en un métal, dans lequel le tube intérieur (2) présente une surface intérieure (3) et une surface extérieure (4),
appliquer (101) au moins un brin (5) comportant une pluralité de fils sur la surface extérieure (4) du tube intérieur (2), dans lequel au moins l'un des fils présente des fibres de carbone, et
introduire (102) le brin (5) avec le tube intérieur (2) dans un tube de protection (6).

11. Procédé selon la revendication précédente, **caractérisé en ce que** l'application (101) du au moins un brin (5) sur la surface extérieure (4) du tube intérieur (2) comprend un tissage, un tressage ou un tricotage autour de la surface extérieure (4) du tube intérieur (2).

12. Procédé selon la revendication 10 ou 11, **caractérisé en ce que** la fourniture (100) du tube intérieur (2) comprend un formage à froid d'une loupe sans soudure pour former le tube intérieur (2).
